# EUROPEAN PATENT SPECIFICATION

(11) **EP 1 604 369 B1**
(45) Date of publication and mention of the grant of the patent: **11.07.2007**
(21) Application number: 04700322.3
(22) Date of filing: 06.01.2004
(51) Int. Cl.: G11B 33/04

(54) **DISK HOLDER**
PLATTENHALTER
ETUI DE DISQUE

(30) Priority: 04.03.2003 US 379034
(43) Date of publication of application: 14.12.2005
(73) Proprietor: Diskjocki, Pickering, Ontario L1W 1Z9 (CA)
(72) Inventor: DEWHURST, Phil, Ajax, Ontario L15 6K5 (CA); LEW, Gene, Markham, Ontario L6B1L7 (CA); YURCHENCO, James, R., Palo Alto, CA 94303 (US); ADAMS, Matt, Mountain View, CA 94041 (US)
(74) Representative: Weston, Robert Dale
(86) International application number: PCT/US2004/000063
(87) International publication number: WO 2004/104796

(56) References cited:
- EP-A- 0 181 835
- EP-A- 0 226 186
- EP-A- 0 362 485
- EP-A- 0 811 976
- EP-A- 1 045 395
- WO-A2-00/38189
- GB-A- 2 276 609
- US-A- 5 232 275
- US-A- 5 547 078

## Description

### FIELD OF THE INVENTION

This invention relates to a storage device and more particularly to a storage case for carrying compact, audio, or video disk media which includes CDROM, CD-G, CD video disks, audio CD's, karaoke CD's, and DVD's.

### BACKGROUND

There are many common storage units on the market for storage of compact disks and DVD's. A less common design for disk storage cases provides a plastic hinged booklet-type case. The disk is stored around a central rosette which engages the annular region in the center of the disk. Problems arise with such cases when removing the disk. The disk may become caught on the rosette, making removal of the disk cumbersome. In other instances, the disk may crack or break when being removed from the case due to difficulty of releasing the disk from the rosette. It is also common for the cover of such cases to become disengaged from the base, leaving the disk exposed when placed in a case.

Document EP 1 045 395 A discloses a disk holder comprising the features of the preamble of claim 1.

### SUMMARY

The invention provides a disk holder comprising the features of claim 1.

Certain embodiments of the present invention solves significant problems in the art by providing a case for storing compact disks and the like that is easy and convenient to use.

Generally described, certain embodiments of the present invention provide an improved storage cradle for compact disks and the like comprising a base having a vertically upstanding outwardly angled side wall. Opposite the side wall are a plurality of lobes, forming a storage slot between the side wall and the lobes. Tabs are preferably located within the lobes, adjacent the bottom of the slot. The disk may be placed inside the storage cradle by positioning the disk between the slot formed between the lobes and the side wall. The tabs are operable to grip the disk, securing the disk within the cradle. A storage cradle also comprises a rear wall and a vertically upstanding front wall.

Certain embodiments of the present invention provide a cradle wherein the side wall is higher than the lobes, allowing for easy insertion of the disk into the slot of the cradle. The side wall is preferably angled from 3 to 4 degrees at the bottom of the side wall. The angle of the side wall prevents damage to the stored disk due to abrasion with the side wall of the cradle when the disk is stored.

Certain embodiments of the present invention also provide a housing inside which the storage cradle may be pivotally mounted. A pull tab attached to the front wall of the cradle facilitates pivoting the cradle within the housing in order to open and close the storage case.

According to certain embodiments of the present invention, the storage case is ergonomically designed in order to provide a user friendly disk storage device. A stored disk can be easily accessed by a user using only a single hand by simply pulling on the pull tab of the cradle and rotating the cradle from the closed to the open position. The disk can easily be removed from the cradle, again using only a single hand. While the tabs secure the disk when located in the cradle, the disk can easily be released from the cradle without great effort and risk to the disk. The disk can similarly be replaced inside the cradle using a single hand by simply placing the disk in the slot of the cradle and gently adjusting the disk so that it is engaged by the tabs.

### BRIEF DESCRIPTION OF THE DRAWINGS

Fig. 1 is a perspective view of a case according to certain embodiments of the invention.
Fig. 2 is a perspective view of a case according to certain embodiments of the invention in the open position.
Fig. 3 is a perspective view of a case according to certain embodiments of the invention in the open position.

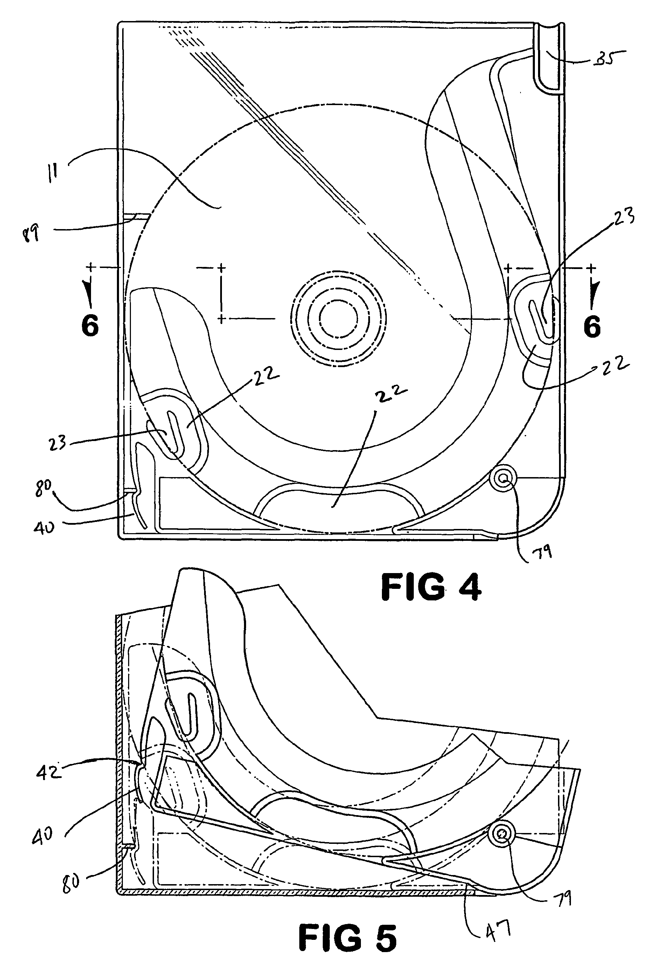

Fig. 4 is a top plan view of a case according to certain embodiments of the invention.
Fig. 5 is a top plan view of a portion of the case according to certain embodiments of the invention showing the opening and closing of the case.
Fig. 6 is a cross sectional view of the case of Fig. 5 containing a disk along the line 6-6.
Fig. 6A is a cross sectional view of the case of Fig. 5 along the line 6-6.
Fig. 7 is a perspective view of the cradle according to certain embodiments of the invention.

### DETAILED DESCRIPTION

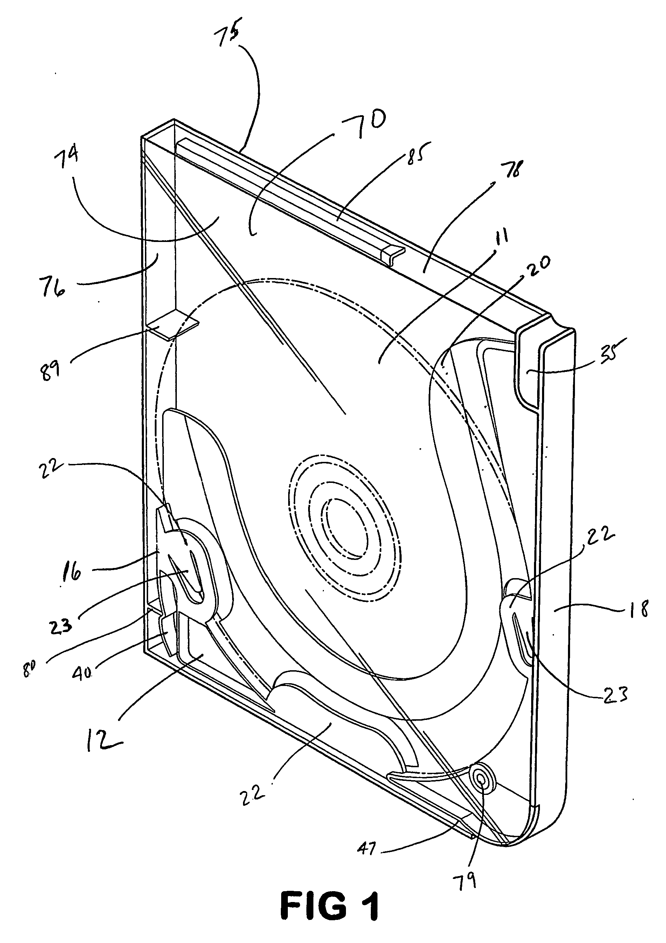

Referring now in more detail to the drawings, in which like numerals refer to like parts throughout the several views, Fig. 1 shows a perspective view of a case 10, comprising a cradle 12 and a housing 70, for storing disks containing readable data according to certain embodiments of the present invention.

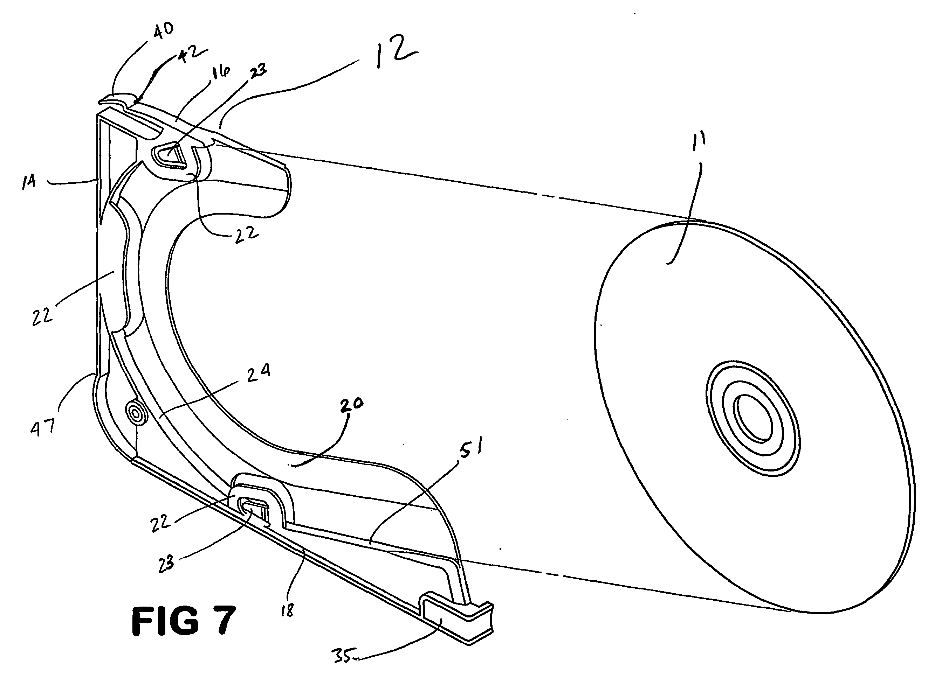

Fig. 7 shows the top surface of the cradle 12 comprising a substantially flat base 14. A rear wall 16 extends vertically upward from a first end of the base. A front wall 18 extends vertically upward from the opposite end of the base 14. The front wall is preferably approximately twice as tall as the rear wall 16. The front wall 18 is also preferably slightly taller than the diameter of a disk 11 to be stored in the cradle.

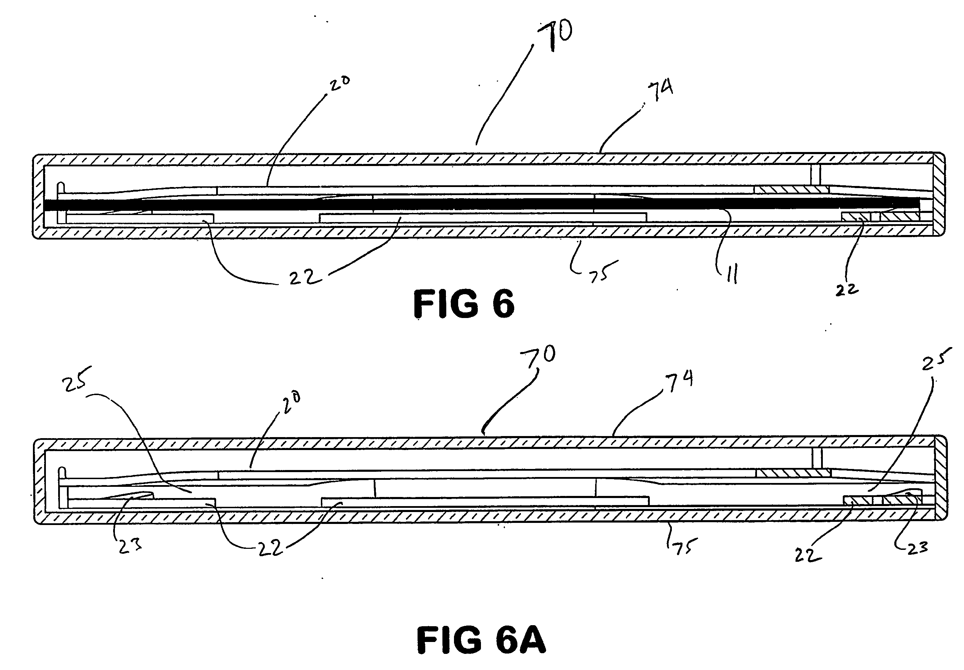

A vertically upstanding side 20 wall extends upward from one side edge of the base and extends upward along the front wall 18 and the rear wall 16. The bottom portion of the side wall 20 is preferably outwardly angled as shown in Fig. 6. According to certain embodiments of the present invention, the angle of the side wall 20 may preferably be between 3 to 4 degrees. The upper portion of the side wall is preferably straight, perpendicular to the base. The top edge of the side wall is generally C-shaped, permitting easy access to a disk when stored in the cradle.

A plurality of lobes 22 preferably extend upwardly from the opposite side edge of the cradle base 14, front wall 18, and rear wall 16. The lobes 22 are preferably shorter in comparison to the side wall 20. A slot 25 is formed between the side wall 20 and the lobes 22, as shown in Fig. 6A. The side wall and lobes are positioned apart to form the slot 25 which accommodates the thickness of the disk 11 to be stored. A ledge 24 is located at the bottom of the slot 25, between the lobes and the side wall. The ledge 24 is also generally C-shaped and has a very similar contour to the top edge of the side wall 20. It is relatively easy to position the disk within the slot 25 of the cradle 12 due to the discrepancies in height between the lobes 22 and the side wall 20. Once inside the slot, the outer edge of the disk will rest on the ledge.

Tabs 23 are preferably located within the lobes 22 of the cradle. The lobes 22 may preferably have a void section and the tabs 23 may preferably extend into the void section of the lobe. The lobes provide protection to the tabs from unwanted deformation or damage, particularly during removal of a stored disk. The tabs 23 are preferably positioned to extend slightly into the slot formed between the lobes and the side wall, slightly above the ledge. According to certain embodiments of the present invention, the tabs may preferably be in the form of a finger-like extension, but any other type of tab may be used if desired. As shown in Fig. 6A, the inner surface of the tabs 23 may preferably be angled such that the top portion of the tab is thinner and the tab gradually increases in thickness towards the bottom of the tab, adjacent the base of the cradle. The distance between the thickest portion of the tab and the bottom of the side wall is preferably slightly less than the thickness of the disk to be stored. As the disk 11 is placed in the slot to be stored in the cradle, the bottom edge of the disk may engage a portion of the tab. Due to the angle of the tab surface, the disk preferably slides along the inner surface of the tab until it reaches the base of the cradle. In this position, the tab 23 engages and provides slight pressure against the unreadable outer edge of the disk creating a friction fit between the tab and the bottom portion of the side wall 20 opposite the lobe. The bottom portion of the side wall, which is adjacent to the readable side of the disk, is angled outwardly so that it does not engage the readable portion of the disk, which is thereby not scratched. The top portion of the side wall is parallel to, but preferably does not touch, the disk. It may be preferable for the portion of the side wall opposite the tab to be a void section of approximately the same size as the lobe. According to certain embodiments of the present invention, the cradle may comprise a plurality of lobes, only some of which further comprise tabs 23 for holding the disk. Alternatively, the cradle may not have any lobes at all, and only tabs that support the disk opposite the side wall.

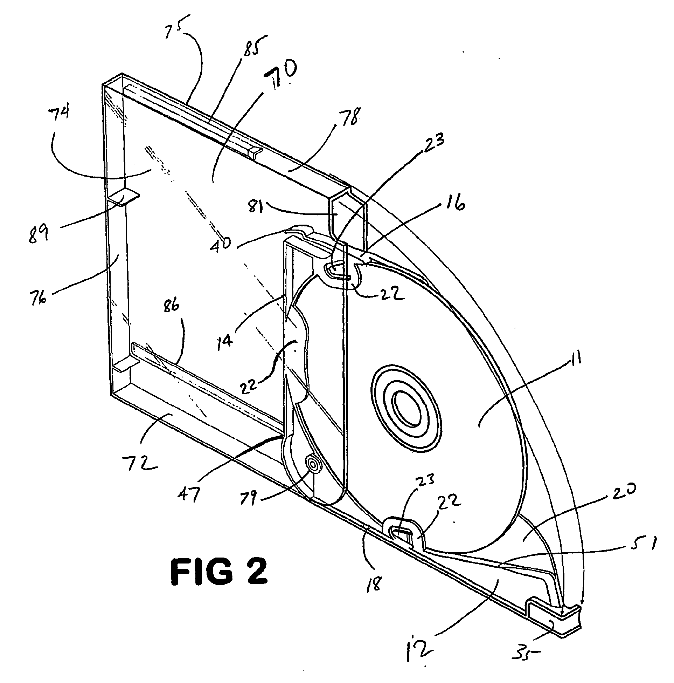

As shown in Figs. 1-3, the cradle 12 according to certain embodiments of the present invention may be mounted within the housing 70 forming a storage case 10. The housing is preferably generally rectangular in shape and comprises a base wall 72. Two vertically upstanding side walls 74, 75 extend upwardly from the side edges of the base wall. The side walls are preferably parallel to each other. A rear wall 76 extends upwardly from the base wall, between the two side walls. A top wall 78 extends across the top of the housing, between the side walls. The housing is sized to hold the cradle and the disk.

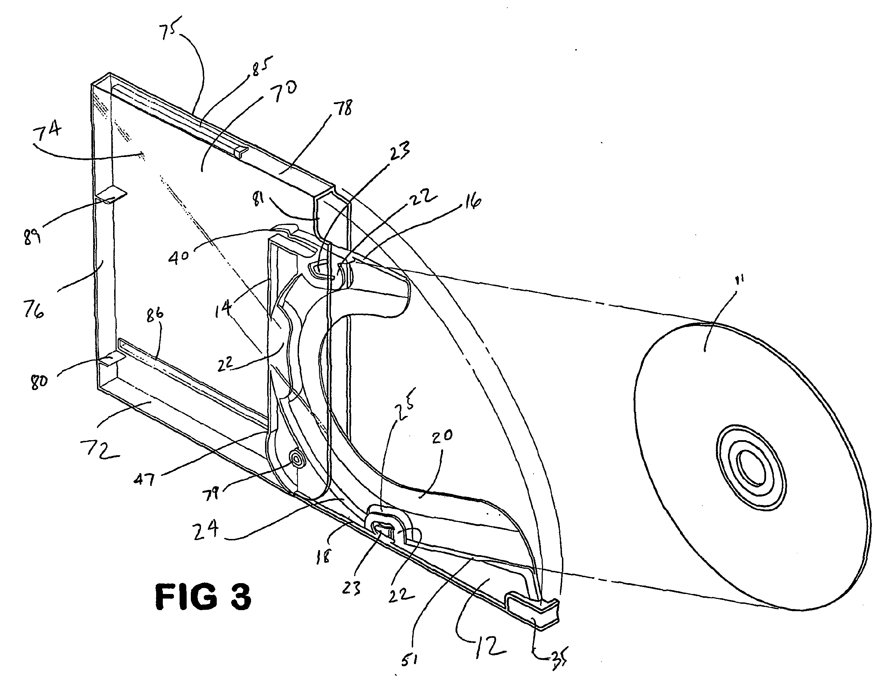

According to certain embodiments of the present invention, the side walls 74, 75 of the housing extend beyond the front edge of the housing base, as shown in Fig. 3. The portion of the housing side walls extending beyond the front edge of the base may preferably be slightly rounded. An axle pin 79 is preferably located on one of the side walls adjacent the rounded edge. The axle pin extends between the two side walls 74, 75.

An aperture is preferably located in the cradle adjacent the corner where the base and the front wall of the cradle meet. The cradle is mounted within the housing by placing the axle pin of the housing through the aperture. In order to do this, the housing preferably comprises two parts. One part comprising one side wall and the second part comprising the other side wall, which can be fastened together. Locking tabs are located on the base portion of one of the housing halves. When the two halves of the housing are placed together, the locking tabs of one half engage grooves located on the second half, fastening the two halves together. It should also be understood that other methods for fastening the two halves may be used including glue, thermal welding and various other snap-fit arrangements.

A finger tab 35 is located on the top portion of the front wall of the cradle 12. The finger tab facilitates rotation of the cradle around the axle formed by the pin of the housing passing through the aperture of the cradle when the storage case 10 is assembled. The finger tab 35 allows a user to rotate the cradle from the open or closed position. When the cradle is in the closed position, the finger tab is preferably accessible because the side wall 74 comprises a notch 81 located near the top of the side wall. The notch 81 exposes the side portion of the finger tab 35. The finger tab may preferably be contoured or ribbed to provide an easier surface for a user to grip the cradle. The finger tab comprises a concave outer side surface and top surface making it convenient to open using the thumb and one finger. The user can preferably place the thumb on the side portion of the finger tab and the finger on the top portion of the finger tab and easily rotate the cradle to the open position.

A latch arm 40 extends from the rear wall of the cradle towards the base. The latch arm comprises a notched and a contoured tip. As the cradle is rotated from the open to the closed position, the tip of the latch arm comes in contact with a locking tab 80 extending into the housing 70 from the rear wall of the housing. The locking tab 80 is preferably located on the rear wall of the housing adjacent to the base of the housing. As the latch arm 40 initially engages the locking tab, the user preferably notices the pressure the locking tab 80 applies to the latch arm. The latch arm is preferably resilient in nature allowing it to deflect as the user continues to rotate the cradle to the closed position. The latch arm will continue to deflect until the locking tab engages the notch 42 of the latch arm. Once the locking tab 80 engages the notch 42 of the latch arm 40, a positive lock is created and the cradle cannot be inadvertently opened. The deflection of the latch arm and engagement by the locking tab provides tactile feedback to a user when closing the case, indicating that the case has been successfully closed. The cradle may be opened by pulling on the finger tab, forcing the locking tab past the notch 42 of the latch arm, releasing the cradle and allowing it to be rotated to the open position.

A first storage rail 85 may preferably be located along the top wall 78 of the housing interior. A second storage rail 86 is preferably located adjacent the base of the interior portion of the housing, on the same side of the housing as the first storage rail. A booklet (not shown) which typically accompanies disks containing readable data may be stored inside the housing. The booklet preferably rests within the housing between the two storage rails. The front wall of the cradle is preferably sized to accommodate a disk identification label.

The cradle, when rotated fully to the open position, may preferably only rotate approximately 90°. The cradle is preferably prevented from rotating beyond approximately 90° by a stop notch 47 located on the base of the cradle. The stop notch 47 preferably contacts the second storage rail 86 when the cradle is rotated approximately 90°, preventing the cradle from rotating any more. Once the stop notch 47 engages the second storage rail 86, the user receives indication that the cradle can not travel any further. By rotating the cradle 90° to the open position, the case can rest on a flat surface in the open condition.

It should be understood that the a disk 11 may be placed within the cradle 12 and stored in the housing 70 according to certain embodiments of the invention. The disk, when being stored, is placed in the slot 25 of the cradle formed between the side wall and the lobes and is preferably engaged by the tabs. The cradle can be rotated within the housing between the closed and open positions as desired. The housing preferably comprises a disk retention tab 89 located on the rear wall 76 of the housing. The disk retention tab 89 is preferably located approximately two thirds of the way up the rear wall of the housing and extends slightly into the housing. When the cradle containing a disk is in the closed position, the outer edge of the disk 11 may preferably rest against the outer edge of the disk retention tab 89, preventing the disk from moving inside the housing in the event the disk becomes dislodged from the tabs.

The ledge 24 preferably forms a ramp 51 along the front wall of the cradle. The ramp prevents the disk from rolling out of the cradle when the cradle is rotated to the open position in the event the disk becomes disengaged from the tabs. Therefore, the cradle can be rotated 90° to the open position and the case can rest on a flat surface without risk of the disk falling out of the cradle.

By providing the rotating cradle within the housing, a user may gain access to the stored disk by opening the case with a single hand. One hand access provides a number of advantages including safety when accessing a disk within an automobile. The present invention provides trouble-free access to a disk and a storage mechanism which does not damage the readable surface of the disk.

It should be understood that multiple cradles can be arranged together, for example in adjacent fashion, creating a disk storage unit. According to certain embodiments of the invention, each case may comprise interlocking tabs in order to attach to another case. Such interlocking tabs would preferably allow a user to purchase individual cases at various times and attach them together, forming a storage unit for multiple disks.

The embodiments described above illustrate particular aspects of the inventive concepts of the invention. It should be understood that structures and methods of retaining disks in a case comprising a cradle and housing may be modified without departing from the scope of the invention as defined in the appended claims.

## Claims

1. A cradle for storing a disc containing readable data, comprising:
i) a base (14) comprising a vertically upstanding side wall (20);
ii) means (22) opposite the side wall to form a slot (25) for storing the disc (11);
ii) a tab (23) located adjacent the base and operable to engage the disc when the disc is placed in the slot for storage;
iii) a rear wall (16);
and
iv) a vertically upstanding front wall (18);
**characterized in that**
v) the side wall (14) is outwardly angled;
vi) a plurality of lobes (22) preferably extend upwardly from the opposite side edge of the cradle base (14), front wall (18) and rear wall (16);
vii) tabs (23) are located within at least some of the lobes..

2. The cradle according to Claim 1 **and further characterized in that** the side wall (20) is taller than the lobes (22); allowing easy insertion of the disc (11) into the slot (25).

3. The cradle according to Claim 1 or Claim 2 **and further characterized in that** the angle of the side wall (20) is three to four degrees.

4. The cradle according to any of Claims 1 to 3 **and further characterized in that** tabs (23) are positioned to engage the unreadable outer edge of the disc (11), forcing the disc against the bottom portion of the side wall (20|) and securing the disc (11) within the cradle (12).

5. The cradle according to any of Claims 1 to 4 **and further characterized in that** the side wall (20) is generally C- shaped.

6. The cradle according to any of Claims 1 to 5 **and further characterized by** a ledge (24) between the side wall (20) and the lobes (22) for supporting the outer edge of the disc (11), the ledge comprising a ramp (51) along the front wall (18) of the cradle (12).

7. A storage case for discs containing readable data **characterized by**:
i) a housing (70);
and,
ii) a storage cradle (12) according to any of Claims 1 to 6 and pivotally mounted at (79) within the housing.

8. The storage case according to Claim 7 **and further characterized by** a finger tab (35) attached to the front wall (18) of the cradle (12) to facilitate pivoting the cradle within the housing (70).

9. The storage case according to Claim 7 or Claim 8 **and further characterized by** a latch arm (40) extending from the rear wall (16) of the cradle (12), the latch arm engaging a locking tab (80) extending from the rear wall (76) of the housing (70) when the cradle is pivoted in the closed position, the latch arm and locking tab creating a positive lock when the storage case (10) is closed.

10. The storage case according to any of Claims 7 to 9 **and further characterized in that** the latch arm (40) further comprises a notch (42) which engages the locking tab (80) creating the positive lock when the storage case (10) is closed.

11. The storage case according to any of Claims 7 to 10 **and further characterized by** storage rails (85, 86) for storing a booklet.

12. The storage case according to Claim 11 **and further characterized in that** the storage rails (85, 86) extend approximately the entire width of the housing (70).

## Patentansprüche

1. Station zur Aufnahme von einer Disc, welche auslesbare Daten enthält, welche enthält:
i) eine Basis (14), welche eine vertikal aufrechte Seitenwand (20) enthält;
ii) ein Mittel (22), welches entgegengesetzt zur Seitenwand ist, um einen Schlitz (25) zur Aufnahme der Disc (11) auszubilden;
iii) einen Streifen (23), welcher sich angrenzend zur Basis befindet und dazu betriebsbereit ist, die Disc in Eingriff zu nehmen, wenn die Disc in den Schlitz zur Aufnahme platziert ist;
iv) eine Rückwand (16); und
v) eine vertikal aufrechte Vorderwand (18);
**dadurch gekennzeichnet, dass**
vi) die Seitenwand (14) nach außen angewinkelt ist;
vii) eine Mehrzahl von Flügeln (22) sich vorzugsweise aufwärts von der entgegengesetzten Seitenkante der Stationsbasis (14), Vorderwand (18) und Rückwand (16) erstrecken;
viii) Streifen (23) sich innerhalb von zumindest einigen der Flügel befinden.

2. Station nach Anspruch 1 und ferner **dadurch gekennzeichnet, dass** die Seitenwand (20) größer als die Flügel (22) ist, welches ein einfaches Einsetzen der Disc (11) in den Schlitz (25) erlaubt.

3. Station nach Anspruch 1 oder Anspruch 2 und ferner **dadurch gekennzeichnet, dass** der Winkel von der Seitenwand (20) gleich 3 bis 4 Grad beträgt.

4. Station nach einem der Ansprüche 1 bis 3 und ferner **dadurch gekennzeichnet, dass** Streifen (23) derart positioniert sind, um den nicht-auslesbaren Außenrand von der Disc (11) in Eingriff zu nehmen, welches die Disc gegen den Bodenabschnitt von der Seitenwand (20) zwängt und die Disc (11) innerhalb der Station (12) sichert.

5. Station nach einem der Ansprüche 1 bis 4 und ferner **dadurch gekennzeichnet, dass** die Seitenwand (20) im Allgemeinen C-förmig ist.

6. Station nach einem der Ansprüche 1 bis 5 und ferner **gekennzeichnet durch** eine Leiste (24) zwischen der Seitenwand (20) und den Flügeln (22), um den Außenrand von der Disc (11) zu halten, wobei die Leiste einen Auslauf (51) entlang der Vorderwand (18) von der Station (12) enthält.

7. Aufnahmeetui für Discs, welche auslesbare Daten enthalten, **gekennzeichnet durch**:
i) ein Gehäuse (70); und
ii) eine Aufnahmestation (12) nach einem der Ansprüche 1 bis 6, und welche an (79) innerhalb des Gehäuses schwenkbar befestigt ist.

8. Aufnahmeetui nach Anspruch 7 und ferner **gekennzeichnet durch** einen Fingerstreifen (35), welcher an der Vorderwand (18) von der Station (12) befestigt ist, um ein Schwenken der Station innerhalb des Gehäuses (70) zu unterstützen.

9. Aufnahmeetui nach Anspruch 7 oder Anspruch 8 und ferner **gekennzeichnet durch** einen Leistenausleger (40), welcher sich von der Rückwand (16) von der Station (12) erstreckt, wobei der Leistenausleger einen Verriegelungsstreifen (80) in Eingriff nimmt, welcher sich von der Rückwand (76) des Gehäuses (70) erstreckt, wenn die Station in die geschlossene Position geschwenkt ist, wobei der Leistenausleger und Verriegelungsstreifen eine sichere Verriegelung erzeugen, wenn das Aufnahmeetui (10) geschlossen ist.

10. Aufnahmeetui nach einem der Ansprüche 7 bis 9 und ferner **dadurch gekennzeichnet, dass** der Leistenausleger (40) ferner eine Kerbe (42) enthält, welche den Verriegelungsstreifen (80) in Eingriff nimmt, welches die sichere Verriegelung erzeugt, wenn das Aufnahmeetui (10) geschlossen ist.

11. Aufnahmeetui nach einem der Ansprüche 7 bis 10 und ferner **gekennzeichnet durch** Aufnahmeschienen (85, 86) zur Aufnahme von einer Broschüre.

12. Aufnahmeetui nach Anspruch 11 und ferner **dadurch gekennzeichnet, dass** sich die Aufnahmeschienen (85, 86) ungefähr über die gesamte Breite des Gehäuses (70) erstrecken.

## Revendications

1. Etui pour le stockage d'un disque contenant des données lisibles, comportant:
i) une base (14) comportant une paroi latérale (20) s'élevant verticalement ;
ii) un moyen (22) opposé à la paroi latérale pour former une fente (25) pour le stockage du disque (11) ;
ii) une languette (23) placée de façon à être adjacente à la base et pouvant être manoeuvrée pour engager le disque lorsque le disque est placé dans la fente pour le stockage ;
iii) une paroi arrière (16) ; et
iv) une paroi avant (18) s'élevant verticalement ;
**caractérisé en ce que**
v) ladite paroi latérale (14) est inclinée vers l'extérieur ;
vi) plusieurs lobes (22) s'étendent avantageusement vers le haut depuis le bord latéral opposé de la base (14) de l'étui, la paroi avant (18) et la paroi arrière (16) ;
vii) les languettes (23) sont placées à l'intérieur d'au moins certains des lobes.

2. Etui selon la revendication 1, **et caractérisé en outre en ce que** la paroi latérale (20) est plus haute que les lobes (22), permettant une insertion aisée du disque (11) dans la fente (25).

3. Etui selon la revendication 1 ou la revendication 2, **et caractérisé en outre en ce que** l'angle de la paroi latérale (20) est de trois à quatre degrés.

4. Etui selon l'une quelconque des revendications 1 à 3, **et caractérisé en outre en ce que** les languettes (23) sont positionnées de façon à engager le bord extérieur non lisible du disque (11), appliquant à force le disque contre la partie de dessous de la paroi latérale (20) et bloquant le disque (11) dans l'étui (12).

5. Etui selon l'une quelconque des revendications 1 à 4, **et caractérisé en outre en ce que** la paroi latérale (20) est d'une forme générale en C.

6. Etui selon l'une quelconque des revendications 1 à 5, **et caractérisé en outre par** un rebord (24) entre la paroi latérale (20) et les lobes (22) pour supporter le bord extérieur du disque (11), le rebord comportant une rampe (51) le long de la paroi avant (18) de l'étui (12).

7. Boîte de stockage pour disques contenant des données lisibles, **caractérisée par :**
i) un boîtier (70) ; et
ii) un étui de stockage (12) selon l'une quelconque des revendications 1 à 6, et monté de façon pivotante en (79) à l'intérieur du boîtier.

8. Boîte de stockage selon la revendication 7, **et caractérisée en outre par** une languette (35) pour un doigt fixée à la paroi avant (18) de l'étui (12) pour faciliter le pivotement de l'étui à l'intérieur du boîtier (70).

9. Boîte de stockage selon la revendication 7 ou la revendication 8, **et caractérisée en outre par** un bras (40) de verrouillage s'étendant depuis la paroi arrière (16) de l'étui (12), le bras de verrouillage engageant une languette (80) de blocage s'étendant depuis la paroi arrière (76) du boîtier (70) lorsque l'étui est amené en pivotant dans la position fermée, le bras de verrouillage et la languette de blocage créant un blocage positif lorsque la boîte (10) de stockage est fermée.

10. Boîte de stockage selon l'une quelconque des revendications 7 à 9, **et caractérisée en outre en ce que** le bras de verrouillage (40) présente en outre une encoche (42) qui engage la languette (80) de blocage, créant le blocage positif lorsque la boîte de stockage (10) est fermée.

11. Boîte de stockage selon l'une quelconque des revendications 7 à 10, **et caractérisée en outre par** des rails (85, 86) de rangement pour le rangement d'un livret.

12. Boîte de stockage selon la revendication 11, **et caractérisée en outre en ce que** les rails de rangement (85, 86) s'étendent approximativement sur toute la largeur du boîtier (70).
